# EUROPÄISCHE PATENTSCHRIFT

(11) **EP 0 993 172 B1**
(45) Veröffentlichungstag und Bekanntmachung des Hinweises auf die Patenterteilung: **27.04.2005**
(21) Anmeldenummer: 99117638.9
(22) Anmeldetag: 08.09.1999
(51) Int. Cl.: H04M 15/28

(54) **Vorrichtung zum Erzeugen eines Pseudo-Gebührensignals für eine gebührenpflichtige Verbindung in einem öffentlichen Kommunikationsnetz**
Device for generation of a pseudo-metering signal for toll public telecommunication network
Dispositif pour la génération d'un pseudo-signal de taxation dans un réseau de communication public

(30) Priorität: 06.10.1998 DE 19845921
(43) Veröffentlichungstag der Anmeldung: 12.04.2000
(73) Patentinhaber: Deutsche Telekom AG, 53113 Bonn (DE)
(72) Erfinder: Kessler, Steffen, 57299 Burbach (DE); Lissmann, Rainer, 35085 Ebsdorfergrund (DE)

(56) Entgegenhaltungen:
- EP-A- 0 200 847
- EP-A- 0 263 961
- CH-A- 662 024
- GB-A- 2 103 041

## Beschreibung

Die Erfindung betrifft eine Vorrichtung zum Erzeugen eines Pseudo-Gebührenimpulses für eine gebührenpflichtige Verbindung für wenigsten eine an ein öffentliches Kommunikationsnetz angeschaltete Endeinrichtung.

Kommunikationsnetze, wie zum Beispiel das weltweite analoge Fernsprechnetz, werden privaten und geschäftliche Nutzern vom Betreiber gegen ein Entgelt zur Verfügung gestellt. Dieses Entgelt wird in Abhängigkeit von der Dauer, Uhrzeit und Entfernung der aktiven Verbindung durch je nach Takteinheit gesendete Gebührenimpulse berechnet. Zuweilen kommt es vor, daß diese Gebührenimpulse von den zwischen den Kommunikationsorten liegenden Vermittlungsstellen insbesondere bei Gesprächen ins Ausland ungewollterweise nicht ausgesendet werden. Dies ist darauf zurückzuführen, daß die beteiligten Vermittlungsstellen über national unterschiedliche Zeichengabesysteme Daten austauschen und dadurch Signale zur Erzeugen von Gebührenimpulsen gelegentlich nicht erkennen. Dieses Ausbleiben der Gebührenimpulse kann vom rufenden Teilnehmer durch Einsatz eines Gebührenimpulszählers bemerkt werden. Auf diese Weise kann gezielt eine Verbindung durch mehrmaliges Ausprobieren aufgebaut werden, die keine Gebührenimpulse verursacht und damit unrechtmäßig kostenfrei verläuft. Den Betreibern der Fernsprechnetze entsteht dadurch ein erheblicher Schaden.

Aus der EP-A-0 200 847 ist ein Verfahren und eine Vorrichtung zum Senden und zum Empfangen von trägerfrequenten Telefontaximpulsen bekannt. Hierbei werden Telefontaximpulse von einer Telefonzentrale gesendet und von einer Anruferstation empfangen, welche unter Ansprechen auf empfangene Telefontaximpulse Quittungsimpulse an die Telefonzentrale zurück sendet. Bei Fehlen von Quittungsimpulsen unterbricht die Telefonzentrale das Telefongespräch.

Aus der CH-A-662 024 ist eine Ausgangsschaltung eines Telefontax-Impulsgenerators einer Telefonzentrale bekannt. Der Telefontax-Impulsgenerator enthält einen Sinusoszillator zur Erzeugung eines Trägerfrequenzsignals, welches durch Ein- und Ausschalten einer Speisegleichspannung mit Hilfe eines Impulskontaktes mit Taximpulsen moduliert wird. Die Ausgangsschaltung weist eine Spule und einen Widerstand auf, um Überspannungen, die durch Resonanzeffekte in der Telefonleitung entstehen können, zu vermeiden oder zu vermindern.

Der Erfindung liegt daher die Aufgabe zugrunde, eine Vorrichtung zu schaffen, die eine Abschreckung für die Durchführung unrechtmäßig gebührenfrei geführter Verbindungen in Kommunikationsnetzen bietet. Dieses technische Problem löst die Erfindung mit den Merkmalen des Anspruchs 1.

Erfindungsgemäß ist eine Vorrichtung zum Erzeugen eines Pseudo-Gebührensignals für wenigstens eine an ein öffentliches Kommunikationsnetz angeschaltete Endeinrichtung in eine Verbindungsstrecke einschleifbar, wobei der Endeinrichtung ein Display zur Anzeige der Gebühren zugeordnet ist.

In der Beschreibung und in den Ansprüchen versteht man unter Pseudo-Gebührensignal ein Signal, das zwar keine Gebührenberechnung auslöst, aber einem rufenden Teilnehmer vortäuschen soll, daß für eine aufgebaute gebührenpflichtige Verbindung Gebühren anfallen, auch wenn von den Vermittlungsstellen ungewollterweise kein Gebührensignal geliefert wird. Als Verbindungsstrecke ist der Teil des Kommunikationsnetzes zu verstehen, der sich zwischen einer rufenden Endeinrichtung und wenigstens einer gerufenen Endeinrichtung befindet. Die Verbindungsstrecke kann daher sowohl Teilnehmeranschlußleitungen als auch Vermittlungsstellen verbindende Leitungen enthalten.

Zur Vermeidung kostenlos geführter, gebührenpflichtiger Verbindungen ist eine erste Einrichtung zum Erkennen des Vorhandenseins oder Fehlens eines von einer zentralen Stelle, beispielsweise einer Vermittlungsstelle, kommenden Gebührensignals sowie eine zweite Einrichtung zum Erkennen einer hergestellten Verbindung vorgesehen. Die erste und zweite Erkennungseinrichtung sind mit einer Auswerteeinrichtung verbunden, die eine Einrichtung zum Erzeugen eines Pseudo-Gebührensignals für die rufende Endeinrichtung nur dann aktiviert, wenn die Auswerteeinrichtung bei einer hergestellten Verbindung kein Gebührensignal erfasst.

Es sei erwähnt, daß die Vorrichtung prinzipiell an jeder Stelle der Verbindungsstrecke eingeschleift werden kann. Ein zweckmäßiger Ort bei grenzüberschreitenden Verbindungen liegt jedoch zwischen einer nationalen Auslandskopfvermittlungsstelle und einer Zielvermittlungsstelle im angrenzenden Ausland, da die Anzahl der beide Vermittlungsstellen verbindenden Verbindungsleitungen, in die jeweils eine solche Vorrichtung eingeschleift werden muß, im Verhältnis zu der Anzahl von Teilnehmeranschlußleitungen geringer ist.

Vorteilhafte Weiterbildungen sind in den Unteransprüchen angegeben.

Die Herstellung einer analogen Verbindung wird zum Beispiel dadurch erkannt, daß der gerufene Teilnehmer seinen Handapparat abhebt. Dazu weist die zweite Erkennungseinrichtung eine Schalteinrichtung, vorzugsweise ein Relais mit zweifachem Wechselkontakt auf, das durch den Stromfluß (etwa 20 bis 30 mA) bei abgehobenem Hörer erregt wird und diesen Zustand der Auswerteeinrichtung signalisiert.

Um Sicherzustellen, daß die Auswerteeinrichtung nicht bereits vor Herstellung der Verbindung aktiviert wird, weist die zweite Erkennungseinrichtung ferner einen Übertrager mit Mittelanzapfung zum Auskoppeln von zur rufenden Endeinrichtung übertragenen Nutzsignalen, eine dem Übertrager nachgeschaltete Einrichtung zur Unterdrückung eines zur gerufenen Endeinrichtung übertragenen Ruftonsignals sowie eine Leitungsnachbildung auf. Denn es ist möglich, daß bereits ein zur rufenden Endeinrichtung übertragenes Ruftonsignal die Schalteinrichtung und damit die Auswerteeinrichtung aktivieren könnte, wodurch diese fälschlicherweise eine hergestellte Verbindung und das Fehlen eines Gebührensignals feststellen würde.

Zweckmäßigerweise ist zwischen den Übertrager und die Auswerteeinrichtung eine Verstärkereinrichtung zum Verstärken der Nutzsignale geschaltet.

Die Vorrichtung kann auch in digitalen Kommunikationsnetzen zum Einsatz kommen. Um eine hergestellte Verbindung erkennen zu können, ist die zweite Erkennungseinrichtung derart ausgebildet, daß sie entweder die über einen Steuerkanal des digitalen Kommunikationsnetzes übertragenen Verbindungsaufbausignale oder die in einem Nutzkanal zum rufenden oder gerufenen Teilnehmer übertragenen Nutzdaten detektieren kann und die Auswerteeinrichtung erst dann aktiviert, wenn eine Verbindung hergestellt worden ist.

Um beim Fehlen eines Gebührensignals ein relativ realitätsnahes Pseudo-Gebührensignal erzeugen zu können, ist ein Rufnummerndetektor vorgesehen, der die Einrichtung zur Erzeugung eines Pseudo-Gebührensignals in Abhängigkeit von der detektierten Rufnummer steuert. Dadurch kann zumindest ein entfernungsabhängiges Pseudo-Gebührensignal erzeugt werden.

Die Erfindung wird nachfolgend anhand eines Ausführungsbeispieles in Verbindung mit den beigefügten Zeichnungen näher erläutert. Es zeigen darin:
- Fig. 1: ein Blockschaltbild des Pseudo-Gebührensignal-Generators, der zwischen zwei Teilnehmer eines analogen Festnetzes eingeschleift ist,
- Fig. 2-4: die schaltungsmäßige Realisierung des in Fig. 1 schematisch dargestellten Pseudo-Gebührensignal-Generators,

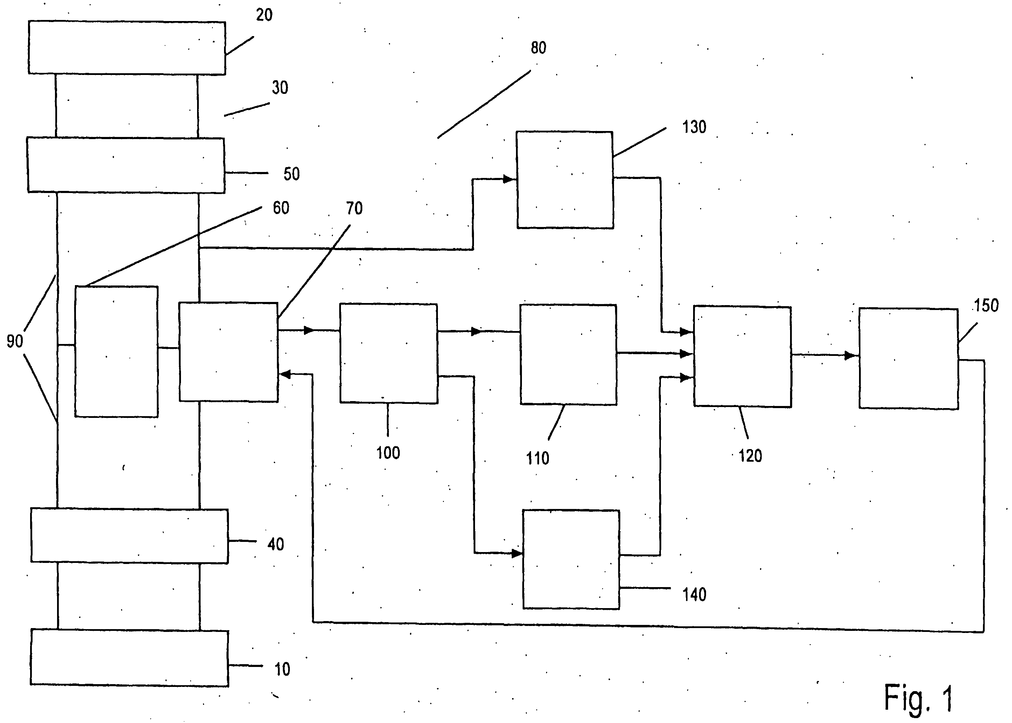

Das Blockschaltbild in Fig. 1 bietet eine prinzipielle beispielhafte Darstellung von zwei Teilnehmern 10, 20 eines analogen grenzüberschreitenden Festnetzes 30. Mit 10 ist der rufende Teilnehmer im Inland, mit 20 der gerufene Teilnehmer im Ausland bezeichnet. Die Teilnehmer 10 und 20, bei denen es sich beispielsweise um Telefone mit integriertem Gebührenzähler und Display zur Anzeige der Gebühren handelt, sind über eine inländische Vermittlungsstelle 40, der sogenannten Auslandskopfvermittlungsstelle und einer im angrenzenden Ausland angeordneten Vermittlungsstelle 50 verbunden. Über eine an sich bekannte Telefon- und Leitungsnachbildung 60 und einen Übertrager 70 mit Mittelanzapfung ist ein Pseudo-Gebührensignal-Generator 80 in die die Auslandskopfvermittlungsstelle 40 und die Vermittlungsstelle 50 verbindende Leitung 90 eingeschleift. Der Übertrager 70 ist derart in die Leitung 90 eingeschleift, daß im wesentlichen nur vom Teilnehmer 20 kommende Signale ausgekoppelt werden. Ausgekoppelte Signale werden vom Übertrager 70 über eine an sich bekannte Rufton-Unterdrückungseinrichtung 100 und einen Signalverstärker 110 dem ersten Eingang einer Auswerteschaltung 120 zugeführt. In die Leitung 90 ist ferner eine Schalteinrichtung 130 geschaltet, die mit dem zweiten Eingang der Auswerteeinrichtung 120 verbunden ist. Die Schalteinrichtung 130 ist beispielsweise als Relais ausgebildet, das bei einem vorbestimmten Schleifenstrom erregt wird. Der Rufton-Unterdrückungseinrichtung 100 ist ein Detektor 140 zum Erkennen eines beispielsweise von der Vermittlungsstelle 50 erzeugten Gebührensignals nachgeschaltet, das zur Berechnung der Kosten der gebührenpflichtigen Verbindung zwischen den Teilnehmern 10 und 20 verwendet wird. Dieses Gebührensignal wird gleichzeitig zum rufenden Teilnehmer 10 übertragen. Der Ausgang des Detektors 140 ist mit dem dritten Eingang der Auswerteschaltung 120 verbunden. Der Ausgang der Auswerteschaltung 120 ist wiederum mit einer Einrichtung 150 zum Erzeugen eines Pseudo-Gebührensignals verbunden. Im vorliegenden Fall entspricht das erzeugte Pseudo-Gebührensignal einer Folge aus herkömmlichen 16-kHz-Gebührenimpulsen. Die Auswerteschaltung 120 ist derart implemetiert, daß sie nur dann am Ausgang ein Aktivierungssignal an die Einrichtung 150 zur Erzeugung eines Pseudo-Gebührensignals anlegt, wenn innerhalb einer vorgegebenen Zeitspanne folgende drei Zustände erfasst werden:
1. Die Schalteinrichtung 130 spricht auf das Abheben des Telefonhörers des Teilnehmers 10 an;
2. vom gerufenen Teilnehmer 20 kommende Nutzsignale werden über den Übertrager 70, die Rufton-Unterdrückungseinrichtung 100 und den Signalverstärker 110 an die Auswerteschaltung 120 angelegt; und
3. der Detektor 140 stellt das Fehlen eines Gebührensignals fest.

In diesem Fall steuert die Auswertungseinrichtung 120 die Einrichtung 150 zum Erzeugen von Pseudo-Gebührenimpulsen an. Die Pseudo-Gebührenimpulse werden über den Übertrager 70, die Leitung 90, die Auslandskopfvermittlungsstelle 40 zum Telefon 10 übertragen. Dem Benutzer des Telefons 10 werden diese Pseudo-Gebührenimpulse an dem Display angezeigt und wie ein reguläres Gebührensignal als Geldeinheit aufaddiert. Dem Anrufer wird durch die Anzeige an seinem Gebührenzähler vorgetäuscht, daß eine reguläre Gebührenzählung stattfindet. Der Anrufer, der gezielt eine Verbindung ins Ausland aufbaut, die fälschlicherweise gebührenfrei verläuft, wird hiermit dazu bewegt, die Verbindung zu unterbrechen, da ihm nunmehr Glauben gemacht wird, für die Verbindung regulär zahlen zu müssen.

Obige Beschreibung bezieht sich auf den Anwendungsfall im analogen Fernsprechnetz. Eine Anwendung der Erfindung ist ebenfalls im digitalen Kommunikationsnetz vorgesehen. Bei Einsatz in digitalen Kommunikationsnetzen entfallen die Telefon- und Leitungsnachbildung 60, der Übertrager 70 und die Rufton-Unterdrückungseinrichtung 100. Stattdessen wird ein an sich bekannter Codierer/Decodierer sowie ein Detektor verwendet, der die Herstellung der Verbindung 30 zwischen den Teilnehmern 10 und 20 erkennen kann. Im übrigen entspricht die Funktionsweise dem analogen Pseudo-Gebühren-Generator 80.

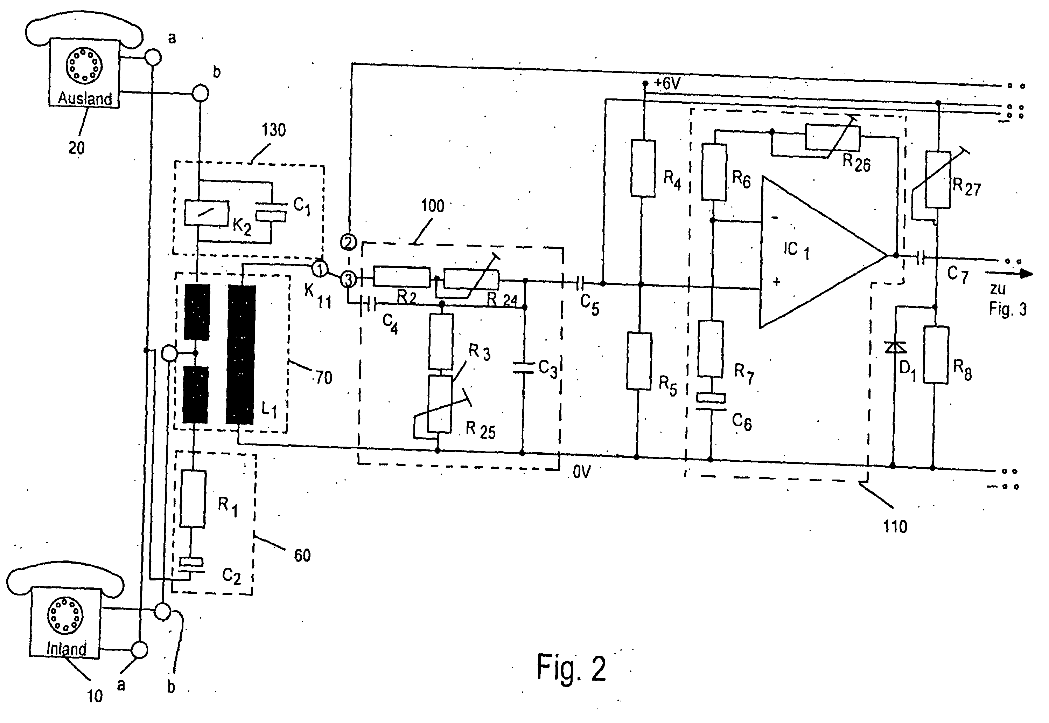

Die Fig. 2 bis 4 zeigen beispielhaft eine schaltungstechnische Realisierung des in Fig. 1 dargestellten Pseudo-Gebührensignal-Generators 80, der in dem analogen Festnetz 30 eingesetzt werden kann.

Fig. 2 zeigt dabei den ersten (linken) Abschnitt des in Fig. 1 dargestellten Pseudo-Gebührensignal-Generators 80. In die b-Ader der Verbindungsleitung 90 ist der Übertrager 70 geschaltet, dessen Primärspule eine Mittelanzapfung aufweist, die im wesentlichen verhindert, daß vom Telefon 10 abgehende Signale zur Auswertung in den Pseudo-Gebührensignal-Generator 80 eingekoppelt werden. Zu diesem Zweck ist ferner der Übertrager 70 mit der Telefon- und Leitungsnachbildung 60, die beispielsweise den Widerstand R1 und den Kondensator C2 umfasst, verbunden. An den Übertrager 70 schließt sich die Rufton-Unterdrückungseinrichtung 100 an, die eine einstellbare Parallelschaltung aus einem Hochpaß mit den Reihenwiderständen R2 und R24 und dem parallelen Kondensator C4 und einem Tiefpaß mit den Reihenwiderständen R3 und R25 und dem dazu parallel geschalteten Kondensator C3 umfaßt. Auf diese Weise kann die Auswertung eines abgehenden Ruftonsignals in der Auswerteschaltung 120 und eine damit einhergehende unerwünschte Erzeugung eines Pseudo-Gebührensignals verhindert werden, wenn aufgrund einer nicht optimal dimensionierten Telefon- und Leitungsnachbildung 60 ein zum gerufenen Telefon 10 abgesandtes Ruftonsignal teilweise in den Pseudo-Gebührensignal-Generator 80 ausgekoppelt wird.

Die Schalteinrichtung 130 umfaßt beispielsweise ein Relais K2 mit einem einfachen Wechselkontakt.

Über einen Koppelkondensator C5 ist die Rufton-Unterdrückungsschaltung 100 mit dem Signalverstärker 110 verbunden, der einen an sich bekannten nichtinvertierenden Operationsverstärker umfasst und über die Widerstände R27 und R8, die Diode D1 und den Kondensator C7 für eine gleichspannungsmäßige Signalauskopplung sorgt.

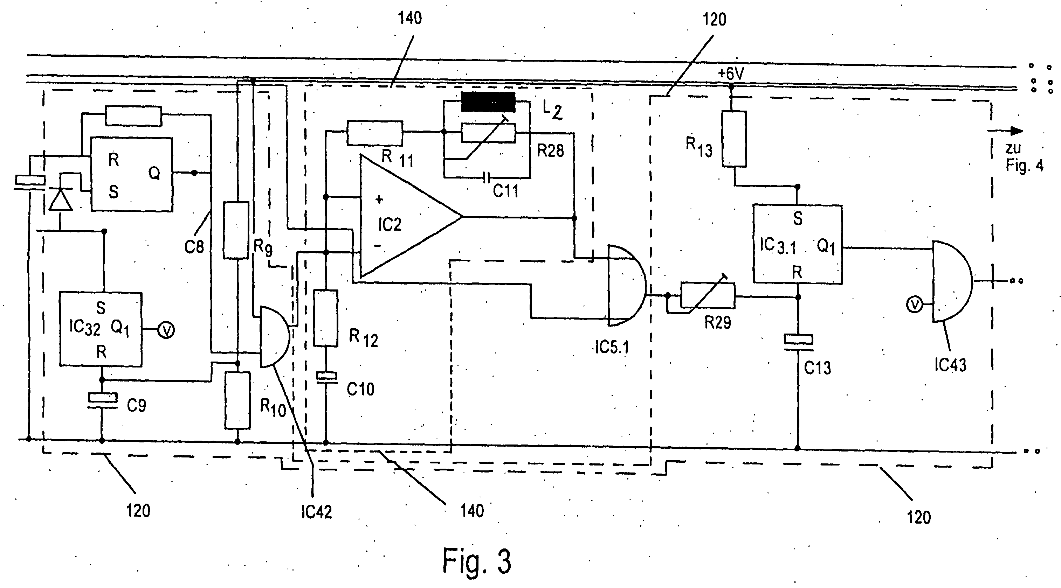

Der Detektor 140 ist, wie Fig. 2 und 3 zeigen, zum Empfang des von der Vermittlungsstelle 50 bereitgestellten Gebührensignals mit dem **ODER-Gatter IC5.1** verbunden. **Der Koppelkondensator C5 ist ebenfalls mit dem ODER-Gatter IC5.1 verbunden.** Der Detektor 140 umfasst einen nichtinvertierenden Operationsverstärker IC2, dessen Rückkopplungszweig aus einer Induktivität L2, einer Kapazität C11, einem Potentiometer R28 und einem Widerstand R11 einen auf die Frequenz des Gebührenimpulses (z. B. 16 kHz) abgestimmten Sperrkreis bildet.

Wie in Verbindung mit Fig. 1 bereits erwähnt, werden die Ausgangssignale der Schalteinrichtung 130, des Signalverstärkers 110 und des Gebührensignal-Detektors 140 der Auswerteeinrichtung 120 zugeführt, deren logische Auswertung der Eingangssignale nur dann die Erzeugung eines Aktivierungssignals für die Einrichtung 150 zur Erzeugung eines Pseudo-Gebührensignals verursacht, wenn während einer hergestellten kostenpflichtigen Verbindung zwischen den Telefonen 10 und 20 von der Vermittlungsstelle 50 kein Gebührensignal bereitgestellt wird.

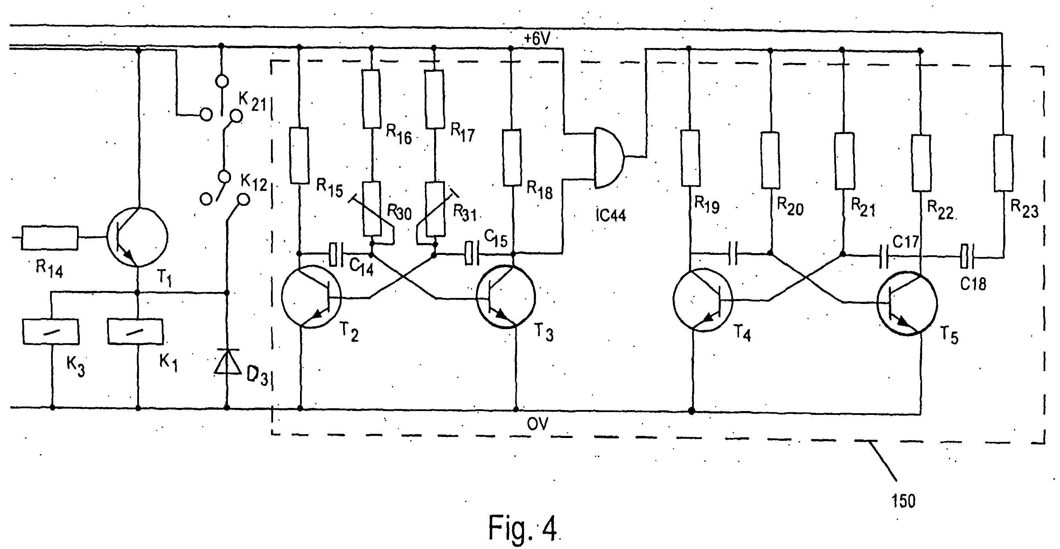

Dazu ist der Ausgang des Operationsvertärkers IC1 des Signalverstärkers 110 über einen Koppelkondensator C7 mit dem Set-Eingang eines J-K-Speicherflipflops IC32 verbunden. Der Reset-Eingang des J-K-Flipflops IC32 ist mittels des Wechselschalters K21 über einen Spannungsteiler, der die Widerstände R9 und R10 enthält, mit einer eine Spannung von 6V liefernden Gleichspannungsquelle verbunden, deren Ladung in einem Elektrolytkondensator C9 gespeichert werden kann. Der Ausgang des UND-Gatters **I**C42 ist mit dem Operationsverstärker IC2 und der Ausgang des Operationsverstärkers IC2 des Gebührensignaldetektors 140 ist mit einem ODER-Gatter IC5.1 verbunden . Der Ausgang des ODER-Gatters IC5.1 ist mit dem Reset-Eingang eines J-K-Speicherflipflops JC31 der Auswerteschaltung 120 verbunden. Der Wechselkontakt K21 verbindet im aufgelegten Zustand des Telefons 10 die Gleichspannungsquelle über einen Widerstand R13 mit dem Set-Eingang des J-K-Speicherflipflops. Die Ausgänge der beiden J-K-Speicherflipflops **I**C32 und **I**C31 sind mit den Eingängen eines UND-Gatters **I**C43 verbunden. Der Ausgang des UND-Gatters **I**C43 ist über einen Widerstand R14 mit der Basis eines Bipolartransistors T1 verbunden, der zwei Relais K1 und K3 und damit die Wechselkontakte K12 und K21 ansteuert. Der Ausgang des UND-Gatters IC43 liegt auf dem logischen Pegel H, wenn die Auswerteschaltung 120 feststellt, daß der Hörer am Telefon 10 abgehoben worden ist, daß Nutzsignale zum Telefon 10 übertragen werden und kein Gebührensignal von der Vermittlungsstelle 50 empfangen wird. Daraufhin wird das Relais K1 erregt und der Wechselkontakt K11 trennt die Auswerteschaltung 120 vom Übertrager 70. Gleichzeitig sorgt der Wechselkontakt K12 für eine Selbsthaltung der Relais K1 und K3. Zwei die Einrichtung 150 bildende astabile Kippstufen, deren Aufbau, wie in Fig. 4 dargestellt, an sich bekannt ist, dienen der Erzeugung des Pseudo-Gebührensignals. Die erste astabile Kippstufe mit den Transistoren T2 und T3 erzeugt beispielsweise ein Impulspausenverhältnis von 1/250, das über die Trimmerwiderstände R30 und R31 einstellbar ist. Die zweite astabile Kippstufe mit den Transistoren T4 und T5 liefert eine Frequenz von beispielsweise 16kHz. Dieser für das analoge Fernsprechnetz bekannte Gebührenimpulstakt wird als Pseudo-Gebührensignal über den Wechselkontakt K11, den Übertrager 70 und die Verbindungsleitung 90 zum Telefon 10 übertragen und dort angezeigt. Die angezeigten Gebührenimpulse werden vom Benutzer des Telefons 10 bei abgehendem Gespräch als auflaufende Gebühren interpretiert, obwohl fälschlicherweise keine externen Gebührenimpulse erzeugt werden.

## Patentansprüche

1. Vorrichtung zum Erzeugen eines Pseudo-Gebührensignals für eine gebührenpflichtige Verbindung für wenigstens eine an ein öffentliches Kommunikationsnetz (30) angeschaltete Endeinrichtung (10, 20), der eine Gebühren-Anzeigeeinrichtung zugeordnet ist, mit folgenden Merkmalen:
- die Vorrichtung ist in eine wenigstens zwei Endeinrichtungen (10, 20) verbindende Verbindungsstrecke (90) einschleifbar,
- eine erste Einrichtung (140) zum Erkennen des Vorhandenseins oder Fehlens eines von einer zentralen Stelle (50) kommenden externen Gebührensignals,
- eine zweite Einrichtung (70, 100, 110, 130) zum Erkennen einer hergestellten Verbindung zwischen wenigstens den beiden Endeinrichtungen (10, 20),
- eine mit der ersten und zweiten Erkennungseinrichtung (70, 100, 110, 130, 140) verbundene Auswertungseinrichtung (120) und
- eine Einrichtung (150) zum Erzeugen eines Pseudo-Gebührensignals für die rufende Endeinrichtung (10), wenn die Auswerteeinrichtung (120) bei einer hergestellten Verbindung kein externes Gebührensignal erfasst.

2. Vorrichtung nach Anspruch 1,
**dadurch gekennzeichnet,**
**daß** die Verbindungsstrecke (90) eine analoge Leitungsstrecke ist und
**daß** die zweite Erkennungseinrichtung (70, 100, 110, 130) eine mit der Auswerteeinrichtung (120) verbundene Schalteinrichtung (130) aufweist.

3. Vorrichtung nach Anspruch 2, **dadurch gekennzeichnet, daß** die zweite Erkennungseinrichtung ferner einen Übertrager (70) mit Mittelanzapfung zum Auskoppeln von zur rufenden Endeinrichtung (10) übertragenen Nutzsignalen, eine dem Übertrager (70) nachgeschaltete Einrichtung (100) zur Unterdrückung eines zur gerufenen Endeinrichtung (20) übertragenen Ruftonsignals sowie eine Telefon- und/oder Leitungsnachbildung (60) aufweist, wobei die Rufton-Unterdrückungseinrichtung (100) mit der Auswerteeinrichtung (100) verbunden ist.

4. Vorrichtung nach Anspruch 3, **gekennzeichnet durch** eine zwischen den Übertrager (70) und die Auswerteeinrichtung (120) geschaltete Verstärkereinrichtung (110) zum Verstärken der Nutzsignale.

5. Vorrichtung nach Anspruch 1,
**dadurch gekennzeichnet,**
**daß** die Verbindungsstrecke (90) eine digitale Leitungsstrecke ist,
**daß** die Vorrichtung (80) einen Codierer/Decodierer aufweist und
**daß** die zweite Erkennungseinrichtung zum Detektieren der über den Steuerkanal der digitalen Leitungsstrecke übertragenen Signalisierung einer hergestellten Verbindung oder zum Detektieren der über einen Nutzkanal der digitalen Leitungsstrecke übertragenen Nutzdaten ausgebildet ist.

6. Vorrichtung nach Anspruch 5,
**gekennzeichnet durch** einen Rufnummerndetektor, wobei die Erzeugungseinrichtung (150) zum Erzeugen eines vorbestimmten Pseudo-Gebührensignals in Abhängigkeit von der detektierten Rufnummer ausgebildet ist.

## Claims

1. Device for generating a pseudo charge signal for a chargeable call for at least one terminal equipment (10, 20) connected to a public communications network (30), said terminal equipment (10, 20) being associated with a charge indicating means, said device having the following features:
- the device is adapted to be looped into a connection link (90) connecting at least two terminal equipments (10, 20);
- a first means (140) for detecting the existence or absence of an external charge signal coming from a central station (50);
- a second means (70, 100, 110, 130) for detecting an established call between at least the two terminal equipments (10, 20);
- an evaluation means (120) connected to the first and second detection means (70, 100, 110, 130, 140) and
- a means (150) for generating a pseudo charge signal for the calling terminal equipment (10) if the evaluation means (120) detects no external charge signal in the case of an established call.

2. Device according to claim 1,
**characterized in that**
the connection link (90) is an analogue line link and
the second detection means (70, 100, 110, 130) has a switching means (130) connected to the evaluation means (120).

3. Device according to claim 2, **characterized in that** the second detection means additionally has a transformer (70) with centre tap for the outcoupling of wanted signals transmitted to the calling terminal equipment (10); a means (100) downstream of the transformer (70) for suppressing a ringing tone signal transmitted to the called terminal equipment (20); as well as a telephone and/or line simulator (60), the ringing tone suppression means (100) being connected to the evaluation means (100).

4. Device according to claim 3, **characterized by** an amplifier means (110), connected between the transformer (70) and the evaluation means (120), for amplifying the wanted signals.

5. Device according to claim 1,
**characterized in that**
the connection link (90) is a digital line link;
the device (80) has a coder/decoder and
the second detection means is formed to detect the signalling, transmitted over the control channel of the digital line link, of an established call or to detect the wanted data transmitted over a data channel of the digital line link.

6. Device according to claim 5,
**characterized by** a call number detector, the generating means (150) being formed to generate a predetermined pseudo charge signal depending on the detected call number.

## Revendications

1. Dispositif pour la génération d'un pseudo-signal de taxation pour une communication payante, pour au moins un équipement terminal (10, 20) raccordé à un réseau de communication public (30), auquel est affectée une installation d'affichage du coût, le dispositif ayant les caractéristiques suivantes :
- le dispositif est bouclable dans une liaison de connexion (90) reliant au moins deux équipements terminaux (10, 20),
- une première installation (140) pour la reconnaissance de la présence ou de l'absence d'un signal de taxation externe provenant d'un poste central (50),
- une deuxième installation (70, 100, 110, 130) pour la reconnaissance d'une communication établie au moins entre les deux équipements terminaux (10, 20),
- une installation d'analyse (120) reliée à la première et à la deuxième installation de reconnaissance (70, 100, 110, 130, 140) et
- une installation (150) pour la génération d'un pseudo-signal de taxation pour l'équipement terminal appelant (10), si l'installation d'analyse (120) ne détecte aucun signal de taxation externe lors d'une communication établie.

2. Dispositif selon la revendication 2,
**caractérisé en ce que**
la liaison de connexion (90) est une voie analogique et
que la deuxième installation de reconnaissance (70, 100, 110, 130) présente une installation de commutation (130) relié à l'installation d'analyse (120).

3. Dispositif selon la revendication 2,
**caractérisé en ce que**
en outre, la deuxième installation de reconnaissance présente un transmetteur (70) avec prise médiane pour le découplage de signaux utiles transmis à l'équipement terminal (10) appelant, une installation (100) branchée en aval du transmetteur (70) pour la suppression d'un signal sonore d'appel transmis à l'équipement terminal appelé (20) ainsi qu'un équilibreur de téléphone et/ou de ligne (60), l'installation de suppression des signaux sonores (100) étant reliée à l'installation d'analyse (100).

4. Dispositif selon la revendication 3,
caractérisé en une installation d'amplification (110) branchée entre le transmetteur (70) et l'installation d'analyse pour l'amplification des signaux utiles.

5. Dispositif selon la revendication 1,
**caractérisé en ce que**
la liaison de connexion (90) est une voie numérique,
le dispositif (80) présente un codeur/décodeur et que
la deuxième installation de reconnaissance est conçue pour la détection de la signalisation d'une communication établie, transmise via le canal de commande de la voie numérique, ou pour la détection des données utiles transmises via un canal utile de la voie numérique.

6. Dispositif selon la revendication 5,
**caractérisé en** un détecteur de numéros d'appel, l'installation de génération (150) étant conçue pour la génération d'un pseudo-signal de taxation prédéfini en fonction du numéro d'appel détecté.
